# EUROPEAN PATENT APPLICATION

(11) **EP 4 752 119 A1**
(43) Date of publication of application: **03.06.2026**
(21) Application number: 25163382.2
(22) Date of filing: 13.03.2025
(51) Int. Cl.: C04B 33/13, C04B 33/132, C04B 33/135, C04B 33/30, C04B 33/32, C04B 35/626, C04B 35/636, C09K 8/80, B01J 2/22

(54) **METHOD AND PROCESS LINE FOR PRODUCING CERAMIC PROPPANTS**

(30) Priority: 02.12.2024 PL 45041624
(71) Applicant: Akademia Gorniczo-Hutnicza im. Stanislawa Staszica w Krakowie, 30-059 Krakow (PL)
(72) Inventor: PANNA, Wojciech, 32-071 Kamie (PL); SZUMERA, Magdalena, 30-433 Kraków (PL)
(74) Representative: Pietruszynska, Elzbieta

(57) **Abstract**

The subject of the invention relates to a method for manufacturing ceramic proppants, comprising the following steps:
a) dosing of components for homogenization selected from clay-based raw materials and organic waste raw materials, and optionally auxiliary additives,
b) homogenization of the components in a plastic mass comprising the mixing of the dosed components with the addition of water to obtain a stiff plastic mass,
c) granulation of the stiff plastic mass by extruding it through perforated rollers (5) with hemispherical recesses to form granules,
d) drying with self-rubbing of the formed granules at a temperature of 100 to 250°C to obtain spherical granules whose shape parameters, defined according to the Krumbein-Schloss diagram as roundness X and sphericity Y, in accordance with the EN: ISO 13503-2:2006 standard, preferably amount to at least 0.7, respectively,
e) fractionation of the dried spherical granules to separate dust, which is optionally returned to step b),
f) firing of the separated spherical granules under reducing conditions to obtain ceramic proppants, and optionally g) cooling of the obtained ceramic proppants.

The subject of the invention also relates to a technological line for manufacturing ceramic proppants, comprising the following devices in sequence:
a) a component-dosing system,
b) a device for homogenizing the components in a plastic mass,
c) perforated rollers (5) with hemispherical recesses,
d) a device for drying with self-rubbing of granules,
e) a device for fractionating,
f) a device for firing under reducing conditions, and optionally
g) a device for cooling,
wherein the devices listed in points a) to f), and in g) if present, are interconnected by a transport system, preferably comprising belt conveyors and/or screw conveyors and/or pneumatic systems and/or bucket elevators.

## Description

### Field of the invention

The subject matter of the invention relates to a method for manufacturing ceramic proppants and a technological line for manufacturing ceramic proppants designed for use in the field of geotechnical engineering and mining, in particular as a material for fracturing wells during shale gas extraction.

### Background of the invention

Ceramic proppants are materials used for fracturing shale gas and they constitute about 10% of the fracturing fluid composition. They are spherical granules manufactured usually from clay-based raw materials of high mechanical strength, preferably characterized by high open porosity to enable gas flow through their entire volume. The production of ceramic proppants most often involves ceramic masses, the primary component of which is clay-based raw material, containing mainly kaolinite and additional raw materials. The components of the ceramic mass are homogenized in an aqueous environment in the so-called slip, and then dried in a spray dryer. Granules are made from the milled ceramic mass, which undergoes the process of granulation in devices such as disc granulators. Subsequently, the granules after additional drying are typically directed to a rotary kiln and sintered at a temperature above 1100°C to maximize the formation of needle-like mullite in the microstructure of the resulting material, primarily at the expense of kaolinite giving the final product its desired strength properties.

### Description of the prior art

Ceramic proppants are primarily used in challenging operational conditions where conventional materials might be deformed or destroyed and where higher compressive strength and sphericity are required, which guarantees enhanced gas extraction efficiency by improving the effectiveness of the fracturing process.

The production of ceramic proppants requires a technology carried out in several steps comprising raw material selection, shaping, sintering, and quality control. Ceramic proppants are manufactured mainly from high-quality mineral raw materials and depending on the application can be produced from pure Al₂O₃, mixtures of aluminosilicates (clay-based raw materials), and/or other oxides with suitable properties. Publications that present in detail the phase composition and chemical makeup of clay-based components also specify their firing temperatures but without specifying the atmospheric conditions within the heating devices (patent documents US 9,796,915 B2 and US 8,727,003 B2). The primary step in the known ceramic proppant manufacturing technology is preparing and homogenizing the raw material mixture in a slip. Subsequent steps involve drying the slip in a spray drier and then milling it to obtain fine powder. The resulting powder is then granulated in disc granulators (or other rotary devices) by water-spray binding method using a small amount of water. Such solutions are also used for processing iron ores, which, after the granulation process, are sintered at lower temperatures compared to proppants obtained from clay-based raw materials (patent documents US2021/0172038 A2 and AU 2019275674 A1). The final stage of the known technology of manufacturing ceramic proppants is thermal treatment, i.e. sintering. Granules are subjected to the process of firing in kilns at very high temperatures, usually from 1150°C to 1600°C. During firing, the crystalline phases sinter, the ceramic microstructure densifies, and reactions forming new phases occur, thereby enhancing the mechanical strength of the manufactured ceramic proppants. This process is crucial for achieving a high-quality product. The process of producing ceramic proppants concludes with the step of cooling the resulting granules and subsequent sorting them based on size and shape. It is critical that the obtained granules have the desired sphericity and roundness, as these properties influence their hydraulic and mechanical performance. These products are typically inspected for compressive strength, bulk density, and permeability.

A specific solution involves obtaining granules by grinding fine-grained fractions, as disclosed in patent description CA2717640 concerning the manufacture of proppants from rocks containing forsterite in their mineral composition.

### Problem to be solved by the invention

As described above, a drawback of the currently used technology of manufacturing ceramic proppants lies in the necessity to conduct the steps of preparing a slurry of ceramic mass components, homogenizing them in an aqueous environment, i.e. in the so-called slip (containing over 30% of water), and then drying in a spray dryer, and milling. Additionally, the method used in the known technology of forming granules from finely milled powder and firing them at very high temperatures is both time- and energy-intensive.

Therefore, the objective of the present invention was to develop a less complex and more economical method for manufacturing ceramic proppants and a technological line for manufacturing ceramic proppants to facilitate the granule-forming process and reduce the temperature required to obtain them, i.e. firing temperature, without the need to prepare a slip and dry it in a spray dryer, and subsequently mill and granulate the components using a water-spray binding method, e.g., in disc granulators.

Another objective of the developed invention was to lower the costs of manufacturing ceramic proppants by streamlining the technological process, which was achieved by avoiding homogenization in a slip and conducting the process in conjunction with forming granules in a stiff plastic mass with low water content, and firing the granules in a reducing atmosphere allowing the firing temperature to be lowered even by 200°C, a thus significantly reducing the energy and time required for the entire process of manufacturing ceramic proppants.

A further objective of the invention was to develop a method for manufacturing ceramic proppants using clay-based raw materials, which are abundant in Poland, and organic waste raw materials, the storage and disposal of which pose significant challenges.

The above objectives have been realized by the solutions presented in the attached claims. Unexpectedly, it was found out that these objectives could be realized by providing a method for manufacturing ceramic proppants from clay-based raw materials and organic waste raw materials, which comprises specific steps as defined in Claim 1, and by providing a technological line for manufacturing such ceramic proppants, comprising devices as defined in Claim 12.

### The gist of the invention

The subject matter of the invention relates to a method for manufacturing ceramic proppants, characterized in that it comprises the following steps:
a) dosing of components for homogenization selected from clay-based raw materials and organic waste raw materials, and optionally auxiliary additives,
b) homogenization of the components in a plastic mass comprising the mixing of the dosed components with the addition of water to obtain a stiff plastic mass,
c) granulation of the stiff plastic mass by extruding it through perforated rollers (5) with hemispherical recesses to form granules,
d) drying with self-rubbing of the formed granules at a temperature of 100 to 250°C to obtain spherical granules whose shape parameters, defined according to the Krumbein-Schloss diagram as roundness (X) and sphericity (Y), in accordance with the EN: ISO 13503-2:2006 standard, preferably amount to at least 0.7, respectively,
e) fractionation of the dried spherical granules to separate dust, which is optionally returned to step b),
f) firing of the separated spherical granules under reducing conditions to obtain ceramic proppants and optionally
g) cooling of the obtained ceramic proppants.

Preferably, in step a) of dosing the components:
i) as clay-based raw materials are used raw materials selected from clays and ceramic clays, kaolin raw materials, illitic raw materials, smectitic raw materials, and mixed raw materials; and
ii) as organic waste raw materials are used raw materials selected from soot, fine coal powder, cellulose derivatives, organic waste from fat production, sewage sludge from wastewater treatment plants, and biomass; and optionally
iii) as auxiliary additives are used:
   - additives improving sinterability, especially fluxes selected from fly ashes, feldspar raw materials, fine granite fractions, and alkalis, and/or
   - non-plastic raw materials, especially quartz sand, chamotte, ground brick, and fly ashes.

Preferably, step a) of dosing the components is conducted by means of a component-dosing system, especially consisting of an active-bottom box feeder (1) and/or a liquid/slurry waste silo (2) with a pump.

Preferably, step b) of homogenization is conducted by means of a device for homogenizing the components in a plastic mass, especially a mixer or a system of at least two connected mixers selected from a pan grinder (3), a twin-shaft mixer (4), a twin-shaft paddle mixer, a planetary mixer, a screw mixer, a blade mixer, a mixer with a rotating bowl, a sieve press, grinders, in particular a pan grinder (3) connected to a twin-shaft mixer (4).

Preferably, step b) of homogenization is conducted by initially mixing the components in a device for homogenizing the components in a plastic mass, especially in a pan grinder (3), after which the plastic mass is preferably subjected to static homogenization by allowing the mass to rest at constant moisture content, especially for at least 2 weeks, and subsequently further homogenization of the plastic mass is preferably conducted, especially in a twin-shaft mixer (4).

Preferably, in step c), perforated rollers (5) with hemispherical recesses having a diameter of 0.1 to 10 mm, preferably 0.1 to 0.5 mm, 0.5 to 1 mm, 1 to 1.5 mm, 1 to 2 mm, 1.5 to 2 mm, 2 to 3 mm, 3 to 5 mm, 5 to 7 mm, and 7 to 10 mm, are used.

Preferably, step d) of drying is conducted in a device for drying with self-rubbing of granules, especially in a rotary dryer (6), in particular at a temperature of 120 to 140°C, for 6 to 8 hours.

Preferably, step e) of fractionation of the dried granules to separate dust is conducted using a device for fractionating, especially screen separators (7), vibrating or rotary sieves.

Preferably, step f) of firing is conducted in a device for firing under reducing conditions, especially selected from a rotary kiln (8) or a fluidized bed furnace, in particular at a temperature of 900 to 1400°C.

Preferably, step g) of cooling is conducted using a device for cooling, especially a rotary cooler (9).

Preferably, the granulometric distribution of the obtained ceramic proppants is within the range of 0.1 to 10 mm, especially 0.1 to 0.5 mm, 0.5 to 1 mm, 1 to 1.5 mm, 1 to 2 mm, 1.5 to 2 mm, 2 to 3 mm, 3 to 5 mm, 5 to 7 mm, and 7 to 10 mm.

The invention also concerns a technological line for manufacturing ceramic proppants, characterized in that it comprises the following devices in sequence:
a) a component-dosing system, preferably consisting of an active-bottom box feeder (1) and/or a liquid/slurry waste silo (2) with a pump,
b) a device for homogenizing the components in a plastic mass, preferably a mixer or a system of at least two connected mixers selected from a pan grinder (3), a twin-shaft mixer (4), a twin-shaft paddle mixer, a planetary mixer, a screw mixer, a blade mixer, a mixer with a rotating bowl, a flotation mixer, a sieve press, grinders, especially a pan grinder (3) connected to a twin-shaft mixer (4),
c) perforated rollers (5) with hemispherical recesses, preferably having a diameter within the range of 0.1 to 10 mm, in particular 0.1 to 0.5 mm, 0.5 to 1 mm, 1 to 1.5 mm, 1 to 2 mm, 1.5 to 2 mm, 2 to 3 mm, 3 to 5 mm, 5 to 7 mm, and 7 to 10 mm,
d) a device for drying with self-rubbing of granules, preferably a rotary dryer (6), in particular having a length of 5 to 20 m and a diameter of 0.5 to 2.5 m,
e) a device for fractionating, preferably screen separators (7), vibrating or rotary sieves,
f) a device for firing under reducing conditions, preferably a rotary kiln (8) or a fluidized bed furnace, and optionally
g) a device for cooling, preferably a rotary cooler (9), in particular having a length of 20 m and a diameter of 1 m,
wherein the devices listed in points a) to f), and in g) if present, are interconnected by a transport system, preferably comprising belt conveyors and/or screw conveyors and/or pneumatic systems and/or bucket elevators.

### Detailed description of the invention

The present inventors have developed an innovative method for manufacturing ceramic proppants based on a reduction firing technology consisting of a single technological process and a technological line for carrying out the developed method for manufacturing ceramic proppants.

The first step of the method according to the invention is the appropriate dosing of components for homogenization, selected from clay-based raw materials and organic waste raw materials, and optionally auxiliary additives (step a)). Preferably, clays and ceramic clays, kaolin raw materials, illitic raw materials, smectitic raw materials, and mixed raw materials (the term "mixed" refers to clays containing a combination of kaolinite, illite, smectite, and mixed-layer minerals such as illite/smectite, illite/kaolinite, etc.) are used as clay-based raw materials. Soot, fine coal powder, cellulose derivatives, e.g. cellulose waste from the paper industry, organic waste from fat production, sewage sludge from wastewater treatment plants (municipal and industrial), and biomass may be used as organic waste raw materials. Optionally, auxiliary additives are introduced to the composition of the raw materials, such as additives improving sinterability designed to lower the firing temperature, preferably fluxes selected from fly ashes, feldspar raw materials, fine granite fractions, and alkalis, and/or non-plastic raw materials reducing shrinkage of the mass during drying and firing, preferably quartz sand, chamotte, ground brick, and fly ashes. Appropriate dosing of components should be understood as repeatable dosing of specified amounts of components for the designed mass per unit of time. This can be achieved by using a component-dosing system, preferably consisting of an active-bottom box feeder (1) for the components of the designed mass in the solid form, such as clay-based raw materials, bulk materials to reduce shrinkage of the plastic mass, and optionally slurry, solidified organic waste raw materials. Components in the form of pulp, suspension, or liquid can be supplied from a liquid/slurry waste silo (2) by pumping to the devices where the homogenization process is carried out.

Thus, the next step of the method according to the invention is the homogenization of the dosed components (step b)), which comprises mixing the dosed raw material components in a plastic mass (containing 12 to 30% of water). For this purpose, wet raw materials are used, without any special preparation, having their natural or deposit geological moisture content, and a small amount of water is introduced to the system (usually 2 to 20% by volume), depending on the water content in the plastic mass, the phase composition, and the type of clay-based raw material used, the amount and moisture content of the organic waste raw material, and the amount and moisture content of other auxiliary raw materials, to achieve a stiff plastic mass. The stiff plastic mass is a mass where the plasticity threshold is not exceeded by more than 10% of water content, is not ductile and sticky, so as not to adhere to the metal parts of the rollers through which it will be passed in the next step.

Homogenization is a process that leads to the uniform distribution of components in the plastic mass, assuming that it does not contain coarse-grained components with grain sizes above 0.05 mm. Therefore, it is necessary to properly select the components and control the grain composition of the raw materials or apply additional grinding processes. Clay-based raw materials should be characterized by the absence of phases with grain sizes above 0.05 mm (as is commonly the case), and auxiliary additives, such as non-plastic raw materials and fluxes, should be added in a powdery form (i.e., as fine powder with grain sizes below 0.05 mm). Sometimes, clay-based raw materials may have a composition that does not need correction or additional auxiliary raw materials introduced to it; alternatively, it is important to increase the proportion of organic waste raw materials introduced in liquid/slurry form to enhance the porosity of the proppants.

The step of homogenization is conducted by means of a device for homogenizing the components in a plastic mass, preferably in a mixer or mixers such as a pan grinder (3), a twin-shaft mixer (4), a twin-shaft paddle mixer, a planetary mixer, a screw mixer, a blade mixer, a mixer with a rotating bowl, a sieve press, or grinders, with the sieve press being the most preferred. A combination of different types of mixers, especially a pan grinder (3) connected with a twin-shaft mixer (4), can also be used as the device for homogenizing.

After the preliminary mixing of components, it is advantageous to use a static homogenization process by allowing the plastic mass to rest at constant moisture content (up to 30%), preferably for at least 2 weeks. The composition of the plastic mass should be constituted by 30 to 95% by volume of clay-based raw materials, 0 to 40% by volume of fluxes, 0 to 30% by volume of non-plastic raw materials, and 5 to 30% by volume of organic waste raw materials. The function of the organic waste raw materials is to create a reducing atmosphere inside the granules and promote the formation of a liquid phase at a lower temperature compared with the process conducted under oxidizing conditions. Studies conducted by the present inventors show that the formation of a liquid phase under reducing conditions lowers the softening temperature even by 200°C. The introduction of organic waste raw materials into the plastic mass is advantageous also due to fact that it imparts significant porosity to the fired granules.

Once the plastic mass has achieved the appropriate degree of component homogenization and stiffness enabling its extrusion, the step of granule formation is carried out by passing the stiff plastic mass through perforated rollers, where the granules are shaped by two parallel and counter-rotating perforated rollers with hemispherical recesses. Achieving the appropriate degree of homogenization of the plastic mass means conducting the homogenization process so that there are no visible differences in the colour or texture in the plastic mass and the components are evenly distributed throughout its cross-section. The appropriate stiffness of the plastic mass primarily refers to its optimal moisture content, which should be adjusted so that it imparts plastic properties enabling extrusion through the perforated rollers of the granulator (typically, it ranges from 8% to 22% but may vary depending on the composition of the raw materials used). Thus, the step of granulating the stiff plastic mass (step c)) is performed by extruding it through the perforated rollers (5) with hemispherical recesses to form granules and impart shape. The size of the hemispherical recesses on the rollers is selected based on the size of the resulting granules and the final ceramic proppants. Preferably, perforated rollers with hemispherical recesses ranging in diameter from 0.1 to 10 mm are used, especially 0.1-0.5 mm, 0.5-1 mm, 1-1.5 mm, 1-2 mm, 1.5-2 mm, 2-3 mm, 3-5 mm, 5-7 mm, and 7-10 mm, with embossing accuracy up to 0.02 mm. Passing the mass through the perforated rollers can be compared to pressing spherical forms of small diameters. For this reason, the plastic mass should have a compact and stiff form so that it does not stick to the perforated rollers. At this step, the spherical shape of the formed granules is still disturbed by the ring-shaped thickening on the granules, which is formed at the point of contact with the perforated rollers due to the excess of plastic mass in this area. Therefore, the rollers should be made so as to ensure their pressure during the formation of granules, thus preventing the outflow of the plastic mass and the formation of a thick ring on the granules. The shape parameters of the formed granules are defined as roundness (X) and sphericity (Y) according to the Krumbein-Schloss diagram, in compliance with the EN: ISO 13503-2:2006 standard.

Due to the irregular shape of the granules formed during the granulation step, the next step of the method according to the invention is to conduct drying with self-rubbing of the formed granules (step d)) at a temperature of 100 to 250⁰C to obtain spherical granules. Preferably, the drying process is conducted using a rotary dryer, where, in addition to the drying of the granules, the ring-shaped thickenings are removed as a result of the self-rubbing of the granules. For this purpose, various types of commonly used rotary dryers can be used, preferably those of significant length, e.g. 5 to 20 meters, with a diameter of about 0.5 to 2.5 meters. It is also possible to use chamber or grate dryers, etc.; however, in such cases, the self-rubbing process should additionally be conducted in a rotary device (drum, tubular, etc.).

The drying process should be conducted quickly due to possible plastic deformation of the granules, which could result in a reduction in their sphericity. Once the temperature causes the granule surfaces to harden, making them smooth and difficult to deform, their movement in the rotary dryer (6) (or another drying device) leads to self-rubbing. As a result, the granules lose the ring-shaped thickenings on their surface. The self-rubbing process is long-lasting, that is why, for effective self-rubbing, a significant number of the drier rotations should be ensured, with the dryer being slightly inclined, or the time during which the granules reside in the rotary device should be significantly extended. Increasing the number of the dryer rotations and increasing its inclination reduces the time during which the granules reside in the dryer. These parameters control the duration of the self-rubbing process.

The step of drying with self-rubbing makes it possible to obtain spherical granules whose shape parameters, defined according to the Krumbein-Schloss diagram as roundness X and sphericity Y, in compliance with the EN: ISO 13503-2:2006 standard, preferably amount to at least 0.7, respectively.

In the step of drying the formed granules, a significant amount of dust is generated due to the self-rubbing process; that is why, the next step of the method according to the invention involves fractionation of the dried spherical granules to separate dust (step e)). This step is conducted using a device for fractionating, preferably screen separators (7), vibrating or rotary sieves, the arrangement of which makes it possible to obtain fractions with a minimal possible particle size distribution. The separated dust can be returned to step b) of homogenization, where it can be used as a moisture stabilizer for the plastic mass in the device for homogenizing, or it can be utilized for other applications.

A key step in terms of the mechanical strength of the manufactured ceramic proppants is the firing of the spherical granules separated in step e) under reducing conditions (step f)). In this step, the separated granules are directed to a device for firing, preferably a rotary kiln (8), operating under reducing conditions at a temperature of 900 to 1400°C (depending on the mineral composition, chemical composition, and concentration of reagents creating the reducing atmosphere), or to other heating devices ensuring the required reducing conditions of operation, e.g. fluidized bed furnaces. It is advantageous to ensure movement of the granules to prevent them from sticking together due to the localized formation of a significant amount of liquid phase within the granules, which causes the neighbouring granules to stick together, which is an undesirable phenomenon. The size of the kiln is determined by the scale of the process and the time during which the granules are held at the highest temperature, thus, these parameters are variable.

The firing process of the formed granules can be conducted similarly to the standard method of producing ceramic proppants in a rotary kiln. However, it is crucial to ensure a reducing atmosphere during firing, which enables reduction of the firing temperature by at least 100°C compared to a process conducted under oxidizing conditions or in an inert gas atmosphere. It is possible by using the appropriate kiln design (which means minimizing system leaks that would allow inflow of air from the outside) and introducing organic waste raw materials into the plastic mass. The first condition is achieved by limiting the inflow of ambient air or by using a burner with an external supply of oxygen/air (both gaseous and carbon-based). It is advantageous to conduct the firing process in fluidized bed furnaces, in which the atmosphere parameters within the furnace can be regulated to a significantly greater extent. Introducing organic waste raw materials into the plastic mass is also advantageous because it imparts substantial porosity to the fired granules. Reducing conditions during firing can also be achieved by co-firing the obtained granules with coal or organic substances that are additionally introduced into the system in this step. When such a method of conducting the process is chosen, it should be taken into account that co-firing requires separating the produced ceramic proppants from unburned elements or performing additional burning in a kiln with an oxidizing atmosphere at temperatures of 400 to 800°C to burn off carbon-containing components.

Due to the high temperature of the granules after the firing step, the manufactured ceramic proppants are optionally subjected to cooling (step g)) to prevent them from sticking together. At this step, the obtained ceramic proppants are directed to a device for cooling, preferably a rotary cooler (9), wherein their temperature is reduced to a level that allows for their safe storage. Using a cooler additionally provides the opportunity to utilize waste heat, e.g. to heat rooms or dry semi-products/raw materials.

All the devices mentioned above for carrying out steps a) to f) and optionally step g) of the method according to the invention are interconnected by a transport system that ensures the effective and safe movement of the raw materials, the resulting plastic mass, and the manufactured granules between these devices. This transport system preferably comprises belt conveyors and/or screw conveyors, and/or pneumatic systems, and/or bucket elevators, the selection of which depends on the type of raw materials used, their weight, cohesiveness, and viscosity.

The method according to the invention, ensures obtaining a granulometric distribution of the produced ceramic proppants in the range of 0.1 to 10 mm, with a preference for obtaining ceramic proppants with the smallest possible granulometric distribution, for example, 0.1 to 0.5 mm, 0.5 to 1 mm, 1 to 1.5 mm, 1 to 2 mm, 1.5 to 2 mm, 2 to 3 mm, 3 to 5 mm, 5 to 7 mm, and 7 to 10 mm, which is determined by the size of the recesses in the perforated rollers.

### Advantageous effects of the invention

The invention developed by the inventors represents an innovative approach to producing ceramic proppants, previously unused in industrial practice as regards both the method for manufacturing ceramic proppants in terms of the sequence and type of conducted steps comprising specific technological processes, and the conditions under which they are conducted, as well as the developed technological line in terms of the selection of specific devices enabling the manufacture of ceramic proppants using the developed method.

The application of the method and technological line for manufacturing ceramic proppants according to the invention ensures a significant reduction in the production costs of ceramic proppants, both in terms of the selection of devices for the production line and the overall production economy.

The method according to the invention enables the manufacturing of ceramic proppants from clay-based raw materials and organic waste raw materials without the need for the steps described in previously applied technologies, i.e. preparing a suspension of components, homogenizing them in an aqueous medium, in the so-called slip, and drying in a spray dryer. By eliminating the aforementioned steps of preparing the suspension of components, the method according to the invention provides advantages by simplifying the granule-forming process using a plastic method and homogenization of the components in a plastic mass having the lowest possible water content. According to the invention, the components used for homogenization are raw materials with natural or original moisture content, without the need for additional preparation. The components are homogenized by mixing them in a plastic mass, with a minimal amount of water, which makes it possible to obtain a stiff plastic mass with a compact consistency enabling its extrusion. Another advantage provided by the present invention is the formation of granules by extruding the stiff plastic mass through perforated rollers. The granules are formed by passing the stiff plastic mass through perforated rollers with hemispherical recesses, preferably having diameters of 0.1 to 10 mm, resulting in the formation of granules having a diameter within this range. The method according to the invention also ensures the smoothing of the formed granules by their self-rubbing during the drying process. The drying step is preferably conducted in rotary dryers, where the formed granules undergo self-rubbing, eliminating the ring-shaped thickenings formed on their surface during extrusion through the perforated rollers and improving their spherical shape.

The indicated steps of the method according to the invention make it possible to obtain advantageous shape parameters of the granules, defined according to the Krumbein-Schlöss diagram as roundness (X) and sphericity (Y). The granules formed as a result of carrying out the aforementioned steps of the method according to the invention are characterized by the shape parameters of at least X=0.7 and Y=0.7.

Moreover, the economy of the method according to the invention is improved by the use of a reducing atmosphere during the step of firing of the formed granules, which enables reduction of the process temperature even by more than 200°C due to the significantly faster melting of the components and the formation of needle-like mullite already at the temperature as low as 950°C, which is determined by the mineral and chemical composition of the plastic mass, in particular its iron and fluxes content. As a result, the invention ensures energy saving and reduces the production time of ceramic proppants.

Additionally, an important aspect and advantage of applying the solution according to the invention is sourcing and utilizing raw materials for the manufacture of ceramic proppants. According to the invention, ceramic proppants are manufactured using clay-based raw materials, which are abundant in Poland, and organic waste raw materials, the storage and disposal of which pose a significant challenge.

The subject matter of this invention is described in detail below with reference to the appended figures and exemplary embodiments, which are not intended to limit in any way the scope of protection of the invention as defined in the claims.

### Brief description of the figures

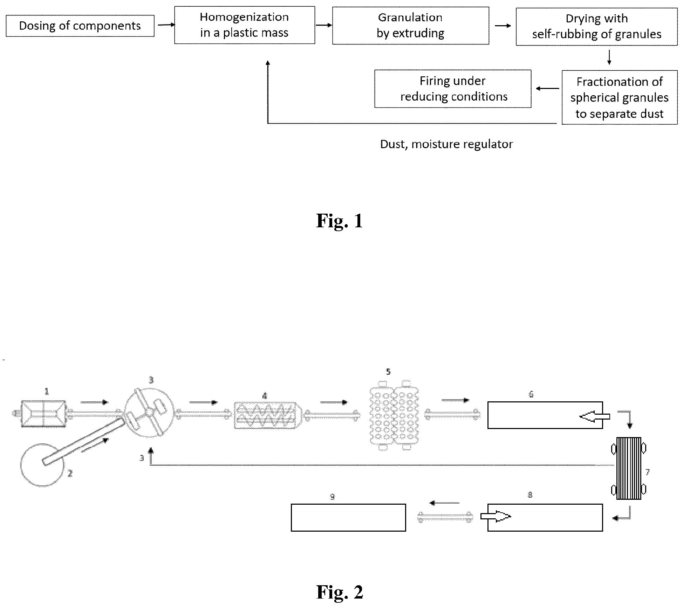

**FIG. 1** shows a technological diagram illustrating the course of the method for manufacturing the ceramic proppants according to the invention,
**FIG. 2** shows a general schematic diagram of the preferred embodiment of the technological line for manufacturing the ceramic proppants according to the invention.

### Embodiments of the invention

The following embodiments illustrate the subject matter of the invention, which however is not limited only to the detailed embodiments described herein.

### Example 1

An example of the invention is a technological line for manufacturing ceramic proppants having a grain size of 1.5 to 2 mm made from kaolin raw material.

Kaolinite clay (comprising 50% vol. of kaolinite, 30% vol. of other clay minerals, and 20% vol. of non-clay minerals), fly ash from a combined heat and power plant (comprising 7% wt. of Na₂O, 5% wt. of K₂O, with its chemical composition supplemented in particular by aluminum, silicon, and iron), and cellulose waste (with relative moisture content of 40%) were delivered to the production plant. It was experimentally determined that in order to achieve an open porosity of about 25% and a bulk density of about 900 kg/m³ in the composition of plastic mass, it is necessary to use 70% vol. of kaolinite clay, 10% vol. of fly ash, and 20% vol. of cellulose waste. All these raw materials, in loose form (fly ash) and plastic form (kaolinite clay, cellulose waste), were placed in an active-bottom box feeder (1) (three-level), by means of which the process of dosing the components was carried out and during it operation the quantities of the raw materials were replenished by an excavator. The raw materials, jointly dosed, were then transported by means of a belt conveyor to a device for homogenizing the components in the plastic mass, i.e. a pan grinder (3) where they were preliminarily mixed. In the pan grinder (3), the raw materials were homogenized, and by adding water in the amount of 5% vol., a moisture content of about 20% was achieved, forming a stiff plastic mass. Within an hour, 2.8 t of kaolinite clay, 0.4 t of fly ash, and 0.8 t of cellulose waste were mixed in the pan grinder with a 4 t/h capacity. Then, the mass was left to rest for 2 weeks, during which static homogenization process was conducted. After resting, the plastic mass was fed into a twin-shaft mixer (4) for further homogenization. The resulting stiff plastic mass was then subjected to granulation by extruding it through perforated rollers (5) with hemispherical recesses having a diameter of 2 mm. The resulting granules were then subjected to drying with self-rubbing in a rotary dryer (6) having a diameter of 1.5 m and a length of 20 m. This step lasted about 6 hours at the temperature of 120°C. As a result of drying with self-rubbing, spherical granules with a grain size distribution within the range of 1.5 to 2 mm were obtained, which were then subjected to fractionation to separate the dust formed during the self-rubbing of the granules. The separated dust was returned to the homogenization step to the pan grinder (3), where it served as a moisture regulator for the mass. The dried spherical granules were subjected to a reduction firing process, for which they were directed to a rotary kiln (8), where the firing process was conducted under reducing conditions (using a coal dust burner with minimal air inflow) at a temperature of about 1000°C for 6 hours, with the granules remaining at the maximum temperature for about 10 minutes. Then, the granules having a temperature of about 800°C were directed via a chute to a rotary cooler (9) having a length of 20 m and a diameter of 1 m, where they were cooled.

The produced ceramic proppants were subjected to quality control, during which the material was classified in terms of density, grain shape (roundness and sphericity), crush resistance, and other physicochemical properties, such as solubility in acids, thermal resistance, or leachability of harmful components. Ceramic proppants meeting the specified conditions described in the EN: ISO 13503-2:2006 standard, Petroleum and natural gas industries - Completion fluids and materials - Part: 2 Measurement of properties of proppants used in hydraulic fracturing and gravel-packing operations, European Committee for Standardization, can be used as a full value material for fracturing rock mass during shale gas extraction.

### Example 2

An example of the invention is a technological line for manufacturing ceramic proppants having a grain size of 0.5 to 1 mm, made from clay-based raw materials for construction ceramics rich in alkalis.

Kaolinite clay (comprising 40% vol. of illite, 20% vol. of other clay minerals, and 20% vol. of non-clay minerals) and cellulose waste (with relative moisture content of 50%) were delivered to the production plant. It was experimentally determined that to achieve an open porosity of about 30% and a bulk density of about 850 kg/m³ in the composition of the plastic mass, it is necessary to use 85% vol. of clay-based raw materials for construction ceramics and 15% vol. of cellulose waste. These raw materials in a plastic form were placed in an active-bottom box feeder (1) (two-level), by means of which the process of dosing the components was carried out and during it operation the quantities of the raw materials were replenished by an excavator. A belt conveyor transported the unmixed but precisely dosed raw materials to a device for homogenizing, i.e. a pan grinder (3), where they were mixed, and by adding water (7% vol.) at this step, the appropriate moisture content (approximately 25%) was achieved, resulting in a stiff plastic mass. Within an hour, 3.4 t of clay-based raw material for construction ceramics and 0.6 t of cellulose waste were mixed in the pan grinder with a 4 t/h capacity. The mass was then directed to further homogenization in a sieve press (an alternative device to the twin-shaft mixer (4)). The resulting stiff plastic mass was subjected to granulation by extruding it through perforated rollers (5) with hemispherical recesses having a diameter of 1 mm. The obtained granules were then subjected to the drying process with self-rubbing. For this step, a rotary dryer (6) having a diameter of 2 m and a length of 15 m was used, in which the drying process with self-rubbing lasted approximately 8 hours at the temperature of 140°C. As a result of drying with self-rubbing, spherical granules with a grain size distribution within the range of 0.5 to 1 mm were obtained, which were subsequently subjected to fractionation to separate the dust generated during the self-rubbing of the granules. The separated dust was returned to the homogenization step to the pan grinder (3), where it served as a moisture regulator for the mass. The dried spherical granules were subjected to a reduction firing process, for which they were directed to a fluidized bed furnace where the firing process was carried out under reducing conditions (using a reducing bed) at a temperature of approximately 950°C for 8 hours, with the granules remaining at the maximum temperature for approximately 10 minutes. Then, the granules having a temperature of about 700°C were directed via a chute to a decanter, from which, after cooling to ambient temperature, the manufactured ceramic proppants were packed into big-bag containers.

The produced ceramic proppants were subjected to quality control, during which the material was classified in terms of density, grain shape (roundness and sphericity), crush resistance, and other physicochemical properties such as solubility in acids, thermal resistance, or leachability of harmful components. Ceramic proppants that meet the specified conditions described in the EN: ISO 13503-2:2006 standard, Petroleum and natural gas industries - Completion fluids and materials - Part: 2 Measurement of properties of proppants used in hydraulic fracturing and gravel-packing operations, European Committee for Standardization, can be used as a full value material for fracturing rock mass during shale gas extraction.

### Possibilities for industrial application of the invention

In Poland, many entities in the building ceramics industry are equipped with facilities for the homogenization and firing of brick products. These entities often face competitive challenges and the complex realities of high energy prices. The production of ceramic proppants could provide them with an opportunity for growth. The devices proposed in the technological line often overlap with those used for brick production, particularly in cases where plants utilize marl-rich raw materials whose shrinkage mast be reduced. In such cases, multi-stage homogenization is conducted with the use of such devices as pan grinders, sieve presses, twin-shaft mixers, or rollers. Rotary kilns and dryers are also available in plants producing expanded clay aggregates or quicklime. Modifications to production lines and/or the purchase of new equipment at specific points in the production line, and/or changes in the technological sequence by introducing transporting machines would allow the technology to be implemented within a short time. The existing infrastructure would support storage and logistics capabilities without excessive capital investment. The costs of introducing the proposed solution would involve additional investments in the process of forming spherical granules and the necessity of purchasing appropriate perforated rollers. Additionally, it would be necessary to introduce modifications to the heating equipment or purchase new equipment capable of ensuring firing in a reducing atmosphere. In the proposed solution, controlling and adjusting the atmosphere inside such heating equipment is essential.

At the same time, Poland is a country rich in clay-based raw materials and it faces challenges related to the storage and disposal of organic waste, which makes the raw material base promising for the implementation of the method for manufacturing ceramic proppants according to the present invention.

### List of reference numbers

1. Active-bottom box feeder
2. Liquid/slurry waste silo with pump
3. Pan grinder
4. Twin-shaft mixer
5. Perforated rollers
6. Rotary dryer
7. Screen separator
8. Rotary kiln
9. Rotary cooler

## Claims

1. A method for manufacturing ceramic proppants, **characterized in that** it comprises the following steps:
a) dosing of components for homogenization selected from clay-based raw materials and organic waste raw materials, and optionally auxiliary additives,
b) homogenization of the components in a plastic mass comprising the mixing of the dosed components with the addition of water to obtain a stiff plastic mass,
c) granulation of the stiff plastic mass by extruding it through perforated rollers (5) with hemispherical recesses to form granules,
d) drying with self-rubbing of the formed granules at a temperature of 100 to 250⁰C to obtain spherical granules whose shape parameters, defined according to the Krumbein-Schloss diagram as roundness (X) and sphericity (Y), in accordance with the EN: ISO 13503-2:2006 standard, preferably amount to at least 0.7, respectively,
e) fractionation of the dried spherical granules to separate dust, which is optionally returned to step b),
f) firing of the separated spherical granules under reducing conditions to obtain ceramic proppants and optionally
g) cooling of the obtained ceramic proppants.

2. The method according to claim 1, **characterized in that** in step a) of dosing the components:
i) as clay-based raw materials are used raw materials selected from clays and ceramic clays, kaolin raw materials, illitic raw materials, smectitic raw materials, and mixed raw materials; and
ii) as organic waste raw materials are used raw materials selected from soot, fine coal powder, cellulose derivatives, organic waste from fat production, sewage sludge from wastewater treatment plants, and biomass, and optionally
iii) as auxiliary additives are used:
- additives improving sinterability, preferably fluxes selected from fly ashes, feldspar raw materials, fine granite fractions, and alkalis, and/or
- non-plastic raw materials, preferably quartz sand, chamotte, ground brick, and fly ashes.

3. The method according to claims 1 or 2, **characterized in that** step a) of dosing the components is conducted by means of a component-dosing system, preferably consisting of an active-bottom box feeder (1) and/or a liquid/slurry waste silo (2) with a pump.

4. The method according to any of claims 1 to 3, **characterized in that** step b) of homogenization is conducted by means of a device for homogenizing the components in a plastic mass, preferably a mixer or a system of at least two connected mixers selected from a pan grinder (3), a twin-shaft mixer (4), a twin-shaft paddle mixer, a planetary mixer, a screw mixer, a blade mixer, a mixer with a rotating bowl, a sieve press, grinders, especially a pan grinder (3) connected to a twin-shaft mixer (4).

5. The method according to any of claims 1 to 4, **characterized in that** step b) of homogenization is conducted by initially mixing the components in a device for homogenizing the components in a plastic mass, preferably in a pan grinder (3), after which the plastic mass is preferably subjected to static homogenization by allowing the mass to rest at constant moisture content, preferably for at least 2 weeks, and subsequently further homogenization of the plastic mass is preferably conducted, preferably in a twin-shaft mixer (4).

6. The method according to any of claims 1 to 5, **characterized in that** in step c) perforated rollers (5) with hemispherical recesses having a diameter of 0.1 to 10 mm, preferably 0.1 to 0.5 mm, 0.5 to 1 mm, 1 to 1.5 mm, 1 to 2 mm, 1.5 to 2 mm, 2 to 3 mm, 3 to 5 mm, 5 to 7 mm, 7 to 10 mm, are used.

7. The method according to any of claims 1 to 6, **characterized in that** step d) of drying is conducted in a device for drying with self-rubbing of granules, preferably in a rotary dryer (6), especially at a temperature of 120 to 140°C, for 6 to 8 hours.

8. The method according to any of claims 1 to 7, **characterized in that** step e) of fractionation of the dried granules to separate dust is conducted using a device for fractionating, preferably screen separators (7), vibrating or rotary sieves.

9. The method according to any of claims 1 to 8, **characterized in that** step f) of firing is conducted in a device for firing under reducing conditions, preferably selected from a rotary kiln (8) or a fluidized bed furnace, preferably at a temperature of 900 to 1400°C.

10. The method according to any of claims 1 to 9, **characterized in that** step g) of cooling is conducted using a device for cooling, preferably a rotary cooler (9).

11. The method according to any of claims 1 to 10, **characterized in that** the granulometric distribution of the obtained ceramic proppants is within the range of 0.1 to 10 mm, preferably 0.1 to 0.5 mm, 0.5 to 1 mm, 1 to 1.5 mm, 1 to 2 mm, 1.5 to 2 mm, 2 to 3 mm, 3 to 5 mm, 5 to 7 mm, 7 to 10 mm.

12. A technological line for manufacturing ceramic proppants, **characterized in that** it comprises the following devices in sequence:
a) a component-dosing system, preferably consisting of an active-bottom box feeder (1) and/or a liquid/slurry waste silo (2) with a pump,
b) a device for homogenizing the components in a plastic mass, preferably a mixer or a system of at least two connected mixers selected from a pan grinder (3), a twin-shaft mixer (4), a twin-shaft paddle mixer, a planetary mixer, a screw mixer, a blade mixer, a mixer with a rotating bowl, a flotation mixer, a sieve press, grinders, especially a pan grinder (3) connected to a twin-shaft mixer (4),
c) perforated rollers (5) with hemispherical recesses, preferably having a diameter within the rage of 0.1 to 10 mm, in particular 0.1 to 0.5 mm, 0.5 to 1 mm, 1 to 1.5 mm, 1 to 2 mm, 1.5 to 2 mm, 2 to 3 mm, 3 to 5 mm, 5 to 7 mm, 7 to 10 mm,
d) a device for drying with self-rubbing of granules, preferably a rotary dryer (6), in particular having a length of 5 to 20 m and a diameter of 0.5 to 2.5 m,
e) a device for fractionating, preferably screen separators (7), vibrating or rotary sieves,
f) a device for firing under reducing conditions, preferably a rotary kiln (8) or a fluidized bed furnace, and optionally
g) a device for cooling, preferably a rotary cooler (9), in particular having a length of 20 m and a diameter of 1 m,
wherein the devices listed in points a) to f), and in g) if present, are interconnected by a transport system, preferably comprising belt conveyors and/or screw conveyors and/or pneumatic systems and/or bucket elevators.
